(19) Europäisches Patentamt
European Patent Office
Office européen des brevets

(11) **EP 3 220 460 A1**

(12) **EUROPEAN PATENT APPLICATION**

(43) Date of publication:
**20.09.2017 Bulletin 2017/38**

(51) Int Cl.:
*H01M 4/485* (2010.01)     *H01M 4/62* (2006.01)
*H01M 4/66* (2006.01)      *H01M 10/36* (2010.01)

(21) Application number: **17160783.1**

(22) Date of filing: **14.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.03.2016 JP 2016052988**

(71) Applicant: **Kabushiki Kaisha Toshiba**
**Tokyo**
**105-8001 (JP)**

(72) Inventors:
• **Yamashita, Yasunobu**
  **Tokyo, 105-8001 (JP)**
• **Ise, Kazuki**
  **Tokyo, 105-8001 (JP)**
• **Matsuno, Shinsuke**
  **Tokyo, 105-8001 (JP)**
• **Takami, Norio**
  **Tokyo, 105-8001 (JP)**
• **Inagaki, Hiroki**
  **Tokyo, 105-8001 (JP)**

(74) Representative: **Hoffmann Eitle**
**Patent- und Rechtsanwälte PartmbB**
**Arabellastraße 30**
**81925 München (DE)**

(54) **SECONDARY BATTERY, BATTERY PACK, AND VEHICLE**

(57)     According to one approach, a secondary battery (51) including a positive electrode (10), a negative electrode (1), and an electrolyte solution is provided. The negative electrode (10) includes a negative electrode current collector, and a negative electrode mixed-materials layer disposed on the negative electrode current collector. The negative electrode current collector has a carbon-including coating layer on at least a part of the surface thereof. The negative electrode mixed-materials layer includes a negative electrode active material including a titanium-including oxide. The electrolyte solution includes an aqueous solvent and an electrolyte.

F I G. 1

EP 3 220 460 A1

Printed by Jouve, 75001 PARIS (FR)

**Description**

FIELD

The present disclosure relates to a secondary battery, a battery pack, and a vehicle.

BACKGROUND

In a nonaqueous electrolyte battery in which charge and discharge is performed by migration of Li ions between a negative electrode and a positive electrode, nonaqueous electrolyte including a nonaqueous solvent is used as an electrolyte solution. The nonaqueous solvent has a wide potential stability, and thus the nonaqueous electrolyte battery can exhibit a high cell voltage of about 3 V to 4 V. Therefore, the nonaqueous electrolyte battery has an energy density more excellent than that of conventional storage batteries. Accordingly, use of the nonaqueous electrolyte battery has recently increased in a wide range of uses including for vehicle-installation such as $\mu$HEV (micro-hybrid electric vehicle) or an idle reduction system, and stationary use.

The nonaqueous solvent, included in the nonaqueous electrolyte, however, is an organic solvent, and thus has high volatility and inflammability. Therefore, there lies danger in the nonaqueous electrolyte battery, such as risk of igniting accompanied by overcharge, temperature rise or impact. As a measurement against such danger, it has been proposed to use an aqueous solvent in the lithium ion battery.

BRIEF DESCRIPTION OF THE DRAWINGS

FIG. 1 is a schematic cross-sectional view showing a coin-type secondary battery, which is one example according to an approach;
FIG. 2 is a schematic cross-sectional view showing a square-type secondary battery, which is one example according to an approach;
FIG. 3 is a schematic cross-sectional view showing a side surface of the square-type secondary battery in FIG. 2;
FIG. 4 is a perspective view showing a battery module, which is one example according to an approach;
FIG. 5 is an exploded perspective view showing a battery pack, which is one example according to an approach;
FIG. 6 is a block diagram showing an electric circuit of the battery pack in FIG. 5;
FIG. 7 is a cross-sectional view schematically showing an example of a vehicle according to an approach; and
FIG. 8 is a cross-sectional view schematically showing another example of a vehicle according to an approach.

DETAILED DESCRIPTION

According to an approach, a secondary battery including a positive electrode, a negative electrode, and an electrolyte solution is provided. The negative electrode includes a negative electrode current collector, and a negative electrode mixed-materials layer disposed on the negative electrode current collector. The negative electrode current collector has a carbon-including coating layer on at least a part of the surface thereof. The negative electrode mixed-materials layer includes a negative electrode active material including a titanium-including oxide. The electrolyte solution includes an aqueous solvent and an electrolyte.

According to another approach, a battery pack is provided. The battery pack includes the secondary battery according to an approach.

According to a further other approach, a vehicle is provided. The vehicle includes the battery pack according to an approach.

According to the approach, there is provided a secondary battery having high safety and high energy density.

The approaches are explained below, with reference to drawings.

(First Approach)

A lithium secondary battery according to an approach includes a positive electrode, a negative electrode, and an electrolyte solution. The negative electrode includes a negative electrode current collector, and a negative electrode mixed-materials layer disposed on the negative electrode current collector. The negative electrode current collector has a carbon-including coating layer on at least a part of a surface thereof. The negative electrode mixed-materials layer includes a negative electrode active material that includes a titanium-including oxide. The electrolyte solution includes an aqueous solvent and an electrolyte.

When an electrolyte solution including an aqueous solvent is used in view of safety, it is difficult to obtain a battery voltage of about 3 to 4 V, which is obtained in a nonaqueous lithium ion battery (a nonaqueous electrolyte battery). When the aqueous solvent is used, it is necessary to use a negative electrode material having a relatively high operating potential such as $LiV_2O_4$ or $LiTi_2(PO_4)_3$, in order to avoid hydrogen generation due to electrolysis on the negative electrode. Consequently, the battery voltage of the aqueous lithium ion battery reaches only about 2 V, and the energy density is lower than that of the nonaqueous lithium ion battery.

When a negative electrode material having a low operating potential such as $Li_4Ti_5O_{12}$ is used in order to increase the battery voltage of the aqueous lithium ion battery, the hydrogen generation on the negative electrode becomes significant, and not only does the safety become reduced, but also, the battery characteristics may be reduced due to the generated hydrogen.

In addition, the aqueous lithium ion battery also has the following problems with regard to the electrode current collector. It is preferable to use an aluminum foil or an aluminum alloy foil as the electrode current collector from the perspective of the power collecting performance and costs. The aluminum foil, however, is easily corroded by pH change in the aqueous solvent, and thus the deterioration of the electrode becomes a problem. On the other hand, when Ti or a stainless steel (SUS) is used as the material for the current collector, it is relatively difficult to process the foil, and thus the use of a mesh is desirable in view of costs. When the current collector is used in the state of a mesh, however, the energy density is reduced in accompany with the volume increase of the current collector.

The lithium secondary battery according to the approach has the carbon-including coating layer on at least a part of the surface of the negative electrode current collector. With such a negative electrode current collector, the electrolysis of the aqueous solvent on the surface of the current collector can be effectively suppressed. The corrosion is also suppressed for the negative electrode current collector having the carbon-including coating layer.

The lithium secondary battery according to the approach includes the positive electrode, the negative electrode, and the electrolyte solution, as described above, and for example, a separator may be disposed, between the positive electrode and the negative electrode. The lithium secondary battery may also include gaskets, electrode terminals, and electrode leads. The lithium secondary battery may further include a container member in which these battery members are housed.

Each feature of the lithium secondary battery according to the approach is explained below.

1) Negative Electrode

The negative electrode includes a negative electrode current collector having a carbon-including coating layer on at least a part of the surface thereof, and a negative electrode mixed-materials layer disposed on the negative electrode current collector and including a negative electrode active material.

The negative electrode current collector has the carbon-including coating layer on at least a part of the surface thereof. Examples of a carbon source included in the coating layer may include, for example, carbonaceous substances such as acetylene black, carbon black, graphite, carbon nanofiber, and carbon nanotube.

The coating layer desirably includes an insulating binder in addition to the carbon. By uniformly forming the carbon-including coating layer including the insulating binder on the surface of the current collector, the electrolysis of the aqueous solvent on the surface of the current collector can be more effectively suppressed. When a metallic body such as a metal foil is used as the electrode current collector, the corrosion of the metallic body can be suppressed by including the insulating binder in the coating layer on the current collector.

As the binder used for the carbon-including coating layer, for example, insulating polymers including polytetrafluoroethylene (PTFE), polyvinylidene fluoride (PVdF), fluororubber, an acrylic resin, and cellulose such as carboxymethyl cellulose may be used.

The carbon-including coating layer desirably has a thickness of 10 nm to 3 $\mu$m. When the thickness of the coating layer is less than 10 nm, the electrolysis of the aqueous solvent may not be sufficiently suppressed. When the thickness is more than 3 $\mu$m, the electrical conductivity may become reduced. It is more preferable that the carbon-including coating layer has a thickness of 50 nm to 1 $\mu$m. When the thickness is within this range, greater effects of suppressing the corrosion of the current collector and suppressing the electrolysis of the aqueous solvent can be expected.

The amount of carbon included in the coating layer is preferably from 60% by weight to 98% by weight. Here, the amount of carbon included in the coating layer refers to a percentage that the weight of carbon included in both the carbon source such as the carbonaceous substance described above and the carbon included in the binder accounts for, relative to the total weight of the carbon-including coating layer. When the included amount of the carbon is less than 60% by weight, the binder in the coating layer is excessive, and thus, the electrical conductivity of the current collector is decreased, resulting in a possibility that a sufficient electrode performance may not be obtained. On the other hand, when the included amount of the carbon is more than 98% by weight, sufficient binding property cannot be obtained, thus resulting in a possibility that the carbon-including coating layer cannot be sustained on the surface of the current collector.

It is preferable that the carbon-including coating layer is uniformly disposed on the whole surface of the negative electrode current collector. Here, "uniformly disposed" refers to, for example, a state in which the amount of carbon included per unit area is within a range of 60% by weight to 98% by weight, while a thickness of the coating layer is from 10 nm to 3 $\mu$m in all regions on the surface of the negative electrode current collector. When the carbon-including coating layer is uniformly formed on the surface of the negative electrode current collector, the insulating polymer in the coating layer covers the surface of the current collector, and thus the electrolysis of the aqueous solvent on the surface of the current collector can be effectively suppressed. On the other hand, when the amount of carbon included in the coating layer is adjusted to a range of 60% by weight to 98% by weight, as described above, even if the carbon-including coating layer covers the entire negative electrode current collector, the power collecting performance is not interrupted.

Furthermore, in the case that the negative electrode including the negative electrode current collector having the carbon-including coating layer is used, the battery voltage can be made higher than in a case where a negative electrode is used, in which the later described metal foil or alloy foil is included as is, without the coating layer, as the negative electrode current collector. The reason therefor is that when the negative electrode current collector having the carbon-including coating layer is used, the overvoltage for hydrogen generation on the surface of the negative electrode current collector is increased, though the overvoltage varies depending on the type and concentration of the electrolyte in the electrolyte solution. In effect, when the negative electrode current collector having the carbon-including coating layer is used, the potential at which the electrolysis of water occurs is reduced. Therefore, an insertion and extraction potential of Li in the negative electrode may be set at a low level without concern of the electrolysis of the aqueous solvent. As a result, since hydrogen is not generated, even if the battery voltage is adjusted to a high level, the energy density can be improved while safety is secured.

The carbon-including coating layer substantially differs from a standard carbon negative electrode, and does not serve as the active material during charge and discharge. This is because the operating potential of the above described negative electrode active material is within a range of about 1.40 to 4.20 V (vs. Li/Li$^+$). As opposed to this, the carbon material exhibits capacity in the vicinity of 0.00 V. Since the operating potential of the negative electrode active material lies outside of the operating potential of the carbon material, as such, the carbon included in the coating layer does not function as an active material. Therefore, the coating layer in the approach does not function alone as the negative electrode material, and thus, the negative electrode in the approach differs from the carbon negative electrode.

The metallic body included in the current collector includes at least one metal selected from the group consisting of aluminum, copper, zinc, nickel, titanium, and stainless steel. The metallic body may include one metal or two or more metals among them. The metallic body is, for example, a metal foil made of the metal. The metallic body is also, for example, a foil made of an alloy including the metal. The metallic body may be, for example, in the shape of a mesh or a porous material, in addition to the foil. The foil shape, having a small volume and a large surface area, is desirable for improving the energy density and the output.

One example of methods for producing the current collector having the carbon-including coating layer on the surface thereof is shown below. The method for producing the current collector having the carbon-including coating layer is not limited to the method described below, so long as the carbon-including coating layer, as described above, can be obtained.

First, a mixture including the carbon source and the binder is dispersed in a solvent to prepare a slurry for a carbon-including coating material. The prepared slurry is coated onto the metallic body of the current collector, for example, by a gravure method, a reverse roll method, a direct roll method, a doctor blade method, a knife method, an extrusion method, and the like. The gravure method, which is capable of coating a thin coat is particularly desirable as the coating method. Next, the coat, obtained by coating the slurry on the metallic body, is dried in an environment having a temperature of 80°C to 350°C. Thereafter, the current collector including the metallic body and the coat formed thereon is subjected to pressing using a mold press or a roll press, whereby the binding property between the metallic body and the carbon-including coating layer can be improved. Here, the current collector is desirably subjected to the pressing at a press pressure of 0.2 t/cm$^2$ to 10 t/cm$^2$.

Next, a method for confirming whether or not the carbon-including coating layer is formed on the surface of the current collector is explained.

There is little change in the thickness of the coating layer, even after the electrode is subjected to pressing for electrode production, because the thickness of the carbon-including coating layer is sufficiently thin. Therefore, the thickness of the coating layer can be measured even for an electrode that has been subjected to pressing.

The composition and the thickness (layer thickness) of the coating layer can be analyzed, for example, by an observation using a scanning transmission electron microscope (STEM). As one example of STEM, it is possible to use HD2300A manufactured by Hitachi High-Technologies Corporation. The thickness of the coating layer can be quantified, for example, from a difference in image contrast between the current collector and the coating layer, in the measurement performed at an acceleration voltage of 200 kV. Here, it is preferable to quantify using an energy dispersive X-ray spectrometry (EDX).

When the measurement is performed using STEM, first, a measurement sample (a current collector for which a coating layer is examined) is subjected to a focused ion beam (FIB) processing to obtain a thin piece having a thickness of 0.1 $\mu$m, and a C film and a W film are formed on the outermost surface for protection. The sample, treated as above, is observed at an observation magnification of 200,000 times. At that time, a difference in the composition between the coating layer and the current collector can be obtained as an image contrast, and the thickness of the coating layer can be quantified.

In the STEM observation, there is a possibility in which slight thickness variation occurs in the carbon-including coating layer due to the pressing of the mixed-materials layer. In such a case, an average thickness is calculated, which is defined as the thickness of the coating layer.

When the thickness of the coating layer is thick, such as 200 nm or more, the thickness of a cross-section of the electrode is measured as indicated below, from which the thickness of the carbon-including coating layer can be calculated.

For the measurement, for example, an SEM-EDX measurement (Scanning Electron Microscopy-Energy Dispersive X-ray spectroscopy) of the cross-section of the electrode can be used. The thickness of the carbon-including coating layer can be determined by this method.

First, an electrode is processed with an ion milling apparatus (IM 4000 manufactured by Hitachi, Ltd.) to obtain a cross-sectional sample. The obtained cross-sectional sample is subjected to a cross-sectional SEM observation and an EDX analysis. As the apparatus used for the SEM-EDX measurement, for example, Miniscope TM 3030, manufactured by Hitachi, Ltd., may be used for the SEM observation, and Quantax 70, manufactured by Bruker Corporation, may be used for the EDX analysis. From the results of obtained SEM images and EDX mapping, the thickness of the carbon-including coating layer can be obtained.

The cross-sectional SEM-EDX measurement is desirable, because according to the measurement, not only can the mixed-materials layer and the carbon-including coating layer be visually distinguished, but also, the composition change of the two layers can be determined by EDX. According to the SEM measurement, for example, the carbon-including coating layer can be examined by observing the cross-section of the electrode at 5000 to 50000 magnification. When examined by SEM, there is a possibility in which a small degree of thickness variation may have resulted in the carbon-including coating layer due to the subjecting of the mixed-materials layer to pressing. In such a case, an average thickness is calculated, and the resulting average value is defined as a thickness of the coating layer.

The included amount of carbon can be quantitated, for example, by a combustion-infrared absorption method in an oxygen stream. For the quantitation by the combustion-infrared absorption method, an automatic carbon analyzer can be used, for example.

A specific example of method for quantitating an amount of carbon included in the carbon-including coating layer is explained below. First, the electrode is adhered by pressing to an adhesive tape. After that, the mixed-materials layer is peeled off from the electrode current collector, whereby a sample is produced in the state where the carbon-including coating layer remains on the surface of the current collector. The produced sample is put in an automatic carbon analyzer (for example, EMIA-820FA manufactured by HORIBA, Ltd.), and an amount of carbon included in the carbon-including coating layer is measured. Based on a carbon weight ($W_c$) of the sample, calculated by an infrared absorption method in an oxygen stream, and a total weight change ($W_{total}$) of the sample from before to after the measurement, the included amount of carbon W (wt%) in the coating layer is calculated by the following formula:

$$W = W_c / W_{total}$$

The negative electrode active material includes a titanium-including oxide.

Examples of the titanium-including oxide may include an oxide of titanium, a lithium-titanium oxide, a niobium-titanium oxide, and a sodium-niobium-titanium oxide. The Li insertion potential of the titanium-including oxide is desirably in a range of 1 V (vs. Li/Li$^+$) to 3 V (vs. Li/Li$^+$). The negative electrode active material may include one of the titanium-including oxides, or include two or more of the titanium-including oxides.

Examples of the oxide of titanium may include an oxide of titanium having a monoclinic structure, an oxide of titanium having a rutile structure, and an oxide of titanium having an anatase structure. For the oxide of titanium having each crystal structure, the composition before charging can be represented by $TiO_2$, and the composition after charging can be represented by $Li_xTiO_2$, wherein x is $0 \leq x \leq 1$. The structure before charging for the oxide of titanium having the monoclinic structure can be represented by $TiO_2$ (B).

Examples of the lithium-titanium oxide include a lithium-titanium oxide having a spinel structure (for example, the general formula: $Li_{4+x}Ti_5O_{12}$ wherein x is $-1 \leq x \leq 3$), a lithium-titanium oxide having a ramsdellite structure (for example, $Li_{2+x}Ti_3O_7$ wherein $-1 \leq x \leq 3$), $Li_{1+x}Ti_2O_4$ wherein $0 \leq x \leq 1$, $Li_{1.1+x}Ti_{1.8}O_4$ wherein $0 \leq x \leq 1$, $Li_{1.07+x}Ti_{1.86}O_4$ wherein $0 \leq x \leq 1$, and $Li_xTiO_2$ wherein $0 < x \leq 1$), and the like. The lithium-titanium oxide includes, for example, a lithium-titanium composite oxide in which a dopant is introduced into the above lithium-titanium oxide having the spinel structure or the ramsdellite structure.

Examples of the niobium-titanium oxide include oxides represented by $Li_aTiM_bNb_{2\pm\beta}O_{7\pm\sigma}$ wherein $0\leq a\leq5$, $0\leq b\leq0.3$, $0\leq\beta\leq0.3$, $0\leq\sigma\leq0.3$, and M is at least one element selected from the group consisting of Fe, V, Mo, and Ta.

Examples of the sodium-niobium-titanium oxide include an orthorhombic Na-including niobium-titanium-composite oxide represented by the general formula $Li_{2+v}Na_{2-w}M1_xTi_{6-y-z}Nb_yM2_zO_{14+\delta}$ wherein $0\leq v\leq4$, $0<w<2$, $0\leq x<2$, $0<y<6$, $0\leq z<3$, $y+z<6$ $-0.5\leq\delta\leq0.5$, M1 includes at least one element selected from the group consisting of Cs, K, Sr, Ba, and Ca, and M2 includes at least one element selected from the group consisting of Zr, Sn, V, Ta, Mo, W, Fe, Co, Mn, and A1.

The negative electrode active material is included in the negative electrode, for example, in the form of particles. The negative electrode active material particle may be singular primary particles, secondary particles in which each of the secondary particles include aggregated primary particles, or a mixture of singular primary particles and secondary particles. The shape of the particles is not particularly limited and, for example, may be a spherical shape, an elliptic shape, a flat shape, a fiber shape, or the like.

The negative electrode mixed-materials layer can be disposed on one surface or both of reverse surfaces of the negative electrode current collector. The negative electrode mixed-materials layer may further include an electro-conductive agent and a binder, in addition to the negative electrode active material.

Examples of the electro-conductive agent may include carbonaceous substances such as acetylene black, carbon black, graphite, carbon nanofiber, and carbon nanotube. The carbonaceous substances may be used alone or as a mixture of plural carbonaceous substances.

The binder binds the active material, the electro-conductive agent, and the current collector. Examples of the binder may include polytetrafluoroethylene (PTFE), polyvinylidene fluoride (PVdF), fluororubber, an acrylic resin, and cellulose such as carboxymethyl cellulose.

With respect to the mixing ratio of the negative electrode active material, the electro-conductive agent, and the binder in the negative electrode mixed-materials layer, it is preferable that the proportion of the negative electrode active material is within a range of 30% by weight to 96% by weight, the proportion of the negative electrode electro-conductive agent is within a range of 2% by weight to 60% by weight, and the proportion of the binder is within a range of 2% by weight to 30% by weight. When the proportion of the electro-conductive agent is less than 2% by weight, the current collecting performance of the negative electrode mixed-materials layer is reduced, and consequently, the high current performance of the battery may be reduced. When the proportion of the binder is less than 2% by weight, the binding between the negative electrode mixed-materials layer and the negative electrode current collector is reduced, and consequently, the cycle performance may be reduced. On the other hand, from the perspective of obtaining a high capacity, the electro-conductive agent and the binder are preferably included in proportions of 60% by weight or less and 30% by weight or less, respectively.

The negative electrode can be produced, for example, by the following method. First, the negative electrode active material, the electro-conductive agent, and the binder are suspended in a solvent to prepare a slurry. The slurry is coated onto one surface or both of reverse surfaces of the negative electrode current collector. Here, as the negative electrode current collector, a current collector having the carbon-including coating layer, which has been produced in advance by the method described above, a commercially available metal foil having the carbon-including coating layer, or the like is used. The coat applied onto the negative electrode current collector is dried to form a negative electrode mixed-materials layer. After that, the negative electrode current collector and the negative electrode mixed-materials layer formed thereon are subjected to pressing. Alternatively, the negative electrode active material, the electro-conductive agent, and the binder may be formed into pellets, and used as the negative electrode mixed-materials layer.

2) Positive Electrode

The positive electrode may include a positive electrode current collector and a positive electrode mixed-materials layer. The positive electrode mixed-materials layer may be formed on one surface or both of reverse surfaces of the positive electrode current collector. The positive electrode mixed-materials layer may include a positive electrode active material, and optionally an electro-conductive agent and a binder.

As the positive electrode active material, for example, compounds capable of having lithium inserted and extracted may be used. The positive electrode active material may include, for example, a lithium-manganese composite oxide, a lithium-nickel composite oxide, a lithium-cobalt-aluminum composite oxide, a lithium-nickel-cobalt-manganese composite oxide, a spinel-type lithium-manganese-nickel composite oxide, a lithium-manganese-cobalt composite oxide, a lithium iron oxide, a lithium fluorinated iron sulfate, a phosphate compound having an olivine crystal structure (for example, $Li_xFePO_4$ wherein $0\leq x\leq1$, or $Li_xMnPO_4$ wherein $0\leq x\leq1$), and the like. The phosphate compound having the olivine crystal structure has excellent thermal stability.

Examples of the positive electrode active material with which a high positive electrode potential can be obtained are described below. Examples include lithium-manganese composite oxides such as $Li_xMn_2O_4$ wherein $0<x\leq1$, or

$Li_xMnO_2$ wherein $0<x\leq1$; a lithium-nickel-aluminum composite oxide such as $Li_xNi_{1-y}Al_yO_2$ wherein $0<x\leq1$ and $0<y\leq1$; lithium-cobalt-composite oxides such as $Li_xCoO_2$ wherein $0<x\leq1$; lithium-nickel-cobalt composite oxides such as $Li_xNi_{1-y-z}CO_yMn_zO_2$ wherein $0<x\leq1$, $0<y\leq1$, and $0\leq z\leq1$; lithium-manganese-cobalt composite oxides such as $Li_xMn_yCo_{1-y}O_2$ wherein $0<x\leq1$ and $0<y\leq1$; spinel-type lithium-manganese-nickel composite oxides such as $Li_xMn_{2-y}Ni_yO_4$ wherein $0<x\leq1$ and $0<y<2$; lithium-phosphorus oxides having an olivine structure such as $Li_xFePO_4$ wherein $0<x\leq1$, $Li_xFe_{1-y}Mn_yPO_4$ wherein $0<x\leq1$ and $0\leq y\leq1$, or $Li_xCoPO_4$ wherein $0<x\leq1$; fluorinated iron sulfates such as $Li_xFeSO_4F$ wherein $0<x\leq1$, and the like.

One kind of the positive electrode active materials may be used alone, or two or more kinds may be used. The positive electrode active material preferably includes at least one compound selected from the group consisting of $LiFePO_4$, $LiMn_2O_4$, and $LiCoO_2$, among the compounds described above. When these materials are used, the oxidative decomposition of the aqueous solvent can be suppressed because the operating potential does not become too high.

The electro-conductive agent, which may be included in the positive electrode mixed-materials layer, includes the same electro-conductive agent as those that may be included in the negative electrode mixed-materials layer. Examples of the electro-conductive agent, accordingly, include carbonaceous substances such as acetylene black, carbon black, graphite, carbon nanofiber and carbon nanotube. The carbonaceous substances may be used alone or as a mixture of plural carbonaceous substances.

The binder binds the active material, the electro-conductive agent, and the current collector in the positive electrode mixed-materials layer, in a similar manner as with the negative electrode mixed-materials layer. The binder, which may be included in the positive electrode mixed-materials layer, includes the same binder as those that may be included in the negative electrode mixed-materials layer. Examples of the binder, accordingly, include polytetrafluoroethylene (PTFE), polyvinylidene fluoride (PVdF), fluororubber, an acrylic resin, cellulose such as carboxymethyl cellulose, and the like.

With respect to the mixing ratio of the positive electrode active material, the electro-conductive agent, and the binder in the positive electrode mixed-materials layer, it is preferable that the proportion of the positive electrode active material is within a range of 30% by weight to 95% by weight, the proportion of the electro-conductive agent is within a range of 3% by weight to 60% by weight, and the proportion of the binder is within a range of 2% by weight to 30% by weight. When the mixing ratio of the electro-conductive agent is 3% by weight or more, the electrical conductivity of the positive electrode can be secured. When the mixing ratio of the electro-conductive agent is 18% by weight or less, the decomposition of the electrolyte solution on the surface of the electro-conductive agent during storage at a high temperature can be reduced. When the mixing ratio of the binder is 2% by weight or more, sufficient electrode strength can be obtained. When the mixing ratio of the binder is 30% by weight or less, the mixed amount of the binder, which is an insulating material, within the positive electrode is decreased, thus the internal resistance can be decreased.

The positive electrode current collector may have the above-described carbon-including coating layer on at least a part of the surface thereof, as with the negative electrode current collector. When the positive electrode current collector has the carbon-including coating layer, corrosion of the positive electrode current collector by the aqueous solvent in the electrolyte solution can be suppressed, and is therefore preferable.

Details of the carbon-including coating layer, which the positive electrode current collector may have, is the same as those of the carbon-including coating layer that the above-described negative electrode current collector has. Accordingly, the details of the carbon-including coating layer are abridged here.

The positive electrode may be produced by the following method. First the positive electrode active material, the electro-conductive agent, and the binder are dispersed in a solvent to prepare a slurry. Then, the slurry is coated onto one surface or both of reverse surfaces of the positive electrode current collector. The coat applied onto the positive electrode current collector is dried to form the positive electrode mixed-materials layer. After that, the positive electrode current collector and the positive electrode mixed-materials layer formed thereon are pressed. Alternatively, the positive electrode active material, the electro-conductive agent, and the binder may be formed into pellets, and used as the positive electrode mixed-materials layer.

When the positive electrode including the positive electrode current collector having the carbon-including coating layer is produced, a current collector having the carbon-including coating layer, which has been produced in advance by the above described method, or a commercially available metal foil having the carbon-including coating layer may be used as the positive electrode current collector.

3) Electrolyte Solution

The electrolyte solution includes an aqueous solvent and electrolyte. The electrolyte solution also includes at least one anion selected from the group consisting of $NO_3^-$, $Cl^-$, $LiSO_4^-$, $SO_4^{2-}$, and $OH^-$. The electrolyte solution may include one anion, or alternatively, include two or more anions.

As the aqueous solvent, a solution including water may be used. Here, the solution including water may be pure water or a mixed solution or mixed solvent of water and a substance other than water.

The amount of water solvent (e.g., an amount of water in the aqueous solvent) included in the electrolyte solution described above is preferably 1 mol or more, based on 1 mol of a salt as solute. The amount of water solvent is more preferably 3.5 mol or more, based on 1 mol of the salt as solute.

As the electrolyte, there can be used a substance that becomes dissociated and thus generates the anion described above when it is dissolved in the aqueous solvent. In particular, lithium salts, which are dissociated into Li ion and the anion described above, are preferable. Such a lithium salt include, for example, $LiNO_3$, LiCl, $Li_2SO_4$, LiOH, and the like.

The lithium salt which is dissociated into the Li ion and the anion described above has a relatively high solubility in aqueous solvents. For that reason, an electrolyte solution can be obtained, in which the anion concentration is of a high concentration of 1 M to 10 M, and thus exhibiting good Li ion diffusibility.

The electrolyte solution including $NO_3^-$ and/or $Cl^-$ can be used in a wide anion concentration range of about 0.1 M to 10 M. From the perspective of ion conductivity, the anion concentration is preferably of a high concentration of 3 M to 9 M. It is more preferable that the anion concentration of the electrolyte solution including $NO_3^-$ or $Cl^-$ is from 8 M to 9 M.

The electrolyte solution including $LiSO_4^-$ and/or $SO_4^{2-}$ may be used in an anion concentration range of about 0.05 M to 2.5 M. From the perspective of ion conductivity, the anion concentration is preferably of a high concentration of 1.5 M to 2.5 M.

The $OH^-$ concentration of the electrolyte solution is desirably from $10^{-10}$ M to 0.1 M.

The electrolyte solution may include both lithium ions and sodium ions.

It is preferable that the electrolyte solution has a pH of 4 to 13. When the pH is less than 4, the decomposition of the active material progresses easily because the electrolyte solution is acidic. When the pH is more than 13, the electrolysis of the aqueous solvent progresses easily because the overvoltage for oxygen generation at the positive electrode is reduced.

The solute in the electrolyte solution, i.e., the electrolyte can be qualitatively and quantitatively determined, for example, by an ion chromatography. The ion chromatography is particularly preferable as the analysis method due to high sensitivity.

Examples of specific measurement conditions for the qualitative and quantitative analysis of the solute included in the electrolyte solution according to the ion chromatography are shown below:

    System: Prominence HIC-SP
    Analysis Column: Shim-pack IC-SA3
    Guard Column: Shim-pack IC-SA3 (G)
    Eluent: 3.6 mmol/L, aqueous sodium carbonate solution
    Flow Rate: 0.8 mL/minute
    Column Temperature: 45°C
    Injection Amount: 50 μL
    Detection: electric conductivity

Whether or not water is included in the electrolyte solution can be examined by GC-MS (a gas chromatography - mass spectrometry) measurement. A water content in the electrolyte solution can be calculated, for example, from ICP (inductively coupled plasma) emission spectrometry, or the like. In addition, the mole numbers of the solvent can be calculated from the measurement of a specific gravity of the electrolyte solution.

4) Electrode Terminal

The electrode terminal may include, for example, an external terminal and an internal terminal. The external terminal is, for example, an electrode conductive tab. Alternatively, a conductive container member such as a metal can may be used as the external terminal, as described below. The internal terminal includes, for example, an electrode lead. The shape of the internal terminal is not particularly limited, and may include, for example, a belt shape, a disk shape, a washer shape, a spiral shape, a corrugated plate shape, and the like.

The electrode terminal is preferably formed from at least one metal selected from the group consisting of aluminum, zinc, titanium, and iron, or from an alloy thereof. Examples of the alloy include aluminum alloy or stainless steel. As the material for the internal terminal, a metal capable of suppressing the electrolysis of the aqueous solvent is desirable. For example, it is preferable that the positive electrode internal terminal is made of titanium, and the negative electrode internal terminal is made of zinc.

The internal terminal may get into contact with the electrolyte solution inside the battery. For that reason, it is desirable that the surface of the internal terminal is protected with an insulating resin, thereby suppressing the electrolysis of the aqueous solvent. As the insulating resin, for example, a polymer material such as polypropylene (PP), polyethylene (PE), nylon, and polyethylene terephthalate (PET) may be used.

The electrode terminal is used for electrically connecting, for example, an external circuit to the inside of the battery through the electrode terminal. By connecting the external circuit to the electrode terminal, supplying of electric current to the external circuit becomes possible. Alternatively, in the case where plural batteries are electrically connected in series or in parallel, the electrode terminals are electrically connected among the plural batteries. 5) Separator

As the separator, for example, a porous film or a synthetic resin non-woven fabric may be used which is formed from a material such as polyethylene (PE), polypropylene (PP), cellulose, glass fiber, or polyvinylidene fluoride (PVdF). Of these, cellulose is preferable because of its excellent ability to hold liquids and Li diffusibility.

A solid electrolyte may also be used as the separator. As the separator, oxides such as LATP $(Li_{1+x}Al_xTi_{2-x}(PO_4)_3$, where $0.1 \leq x \leq 0.4$) having a NASICON type framework, LATP $(Li_{2.9}PO_{3.3}N_{0.46})$ which is amorphous, garnet type LLZ $(Li_7La_3Zr_2O_{12})$ are preferable.

6) Gasket

As the gasket, for example, a polymer material such as polypropylene (PP), polyethylene (PE), nylon or polyethylene terephthalate (PET) may be used. By using the polymer material as the gasket, not only can the air-tightness of the battery interior be improved, but also, short-circuiting between the positive electrode and the negative electrode can be prevented.

7) Container Member

As the container member, a bag-shaped container made of a laminate film or a metal container may be used. The shape of the container member may include, for example, a flat-type, a square-type, a cylindrical-type, a coin-type, a button-type, a sheet-type, a stack-type, and the like. Of course, any appropriate container member can be used depending on the use of the lithium secondary battery. For example, when the lithium secondary battery is installed on a portable electronic device, a container member for a small-sized battery can be used. When the lithium secondary battery is installed on vehicles such as two-wheel to four-wheel automobiles, a container member for a large scale battery can be used.

As the laminate film, for example, a multilayer film which includes resin layers and a metal layer disposed between the resin layers may be used. The metal layer is preferably an aluminum foil or aluminum alloy foil in order to reduce the weight. As the resin layer, for example, a polymer material such as polypropylene (PP), polyethylene (PE), nylon, or polyethylene terephthalate (PET) may be used. The laminate film can be sealed and formed into a shape of the container member. The laminate film has preferably a thickness of 0.5 mm or less, more preferably 0.2 mm or less.

The metal container is preferably formed from, for example, at least one metal selected from the group consisting of aluminum, zinc, titanium, and iron, or an alloy of the metal. Specific examples of the alloy include aluminum alloy and stainless steel. The metal container preferably has a wall thickness of 0.5 mm or less, more preferably 0.2 mm or less.

When the metal container is used as the container member, the metal container can also be used as the electrode terminal (the external terminal).

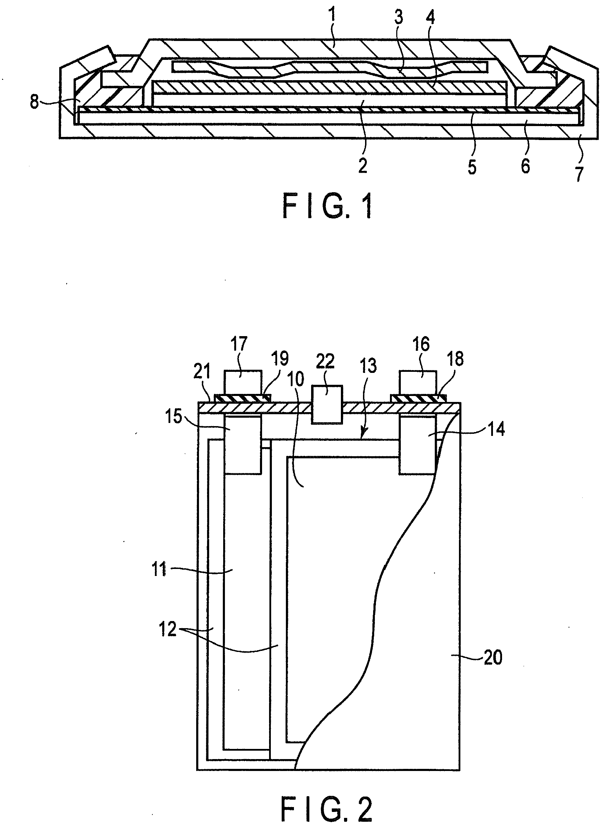

Examples of the lithium secondary battery according to the approach are explained below, with reference to FIG. 1 to FIG. 3.

FIG. 1 shows one example of a lithium secondary battery using a coin-type metal container.

As shown in FIG. 1, a coin-type lithium secondary battery has a structure in which a negative electrode 6, a separator 5, a gasket 8, a positive electrode 2, a spacer 4, a washer 3, and a positive electrode can 1 are sequentially stacked in a negative electrode can 7. In the negative electrode can 7, an electrolyte solution (not shown) is housed. The electrolyte solution may be housed within the lithium secondary battery in a state in which the negative electrode 6, the separator 5 and/or the positive electrode 2 are impregnated with the electrolyte solution. The electrolyte solution can also be housed within the lithium secondary battery in a state in which the solution is filled in a space within the battery.

Here, the negative electrode 6 is, for example, a disk-shaped negative electrode obtained by punching a negative electrode, produced as described above, into a round shape. The positive electrode 2 is, for example, a disk-shaped positive electrode obtained by punching a positive electrode, produced as described above, into a round shape.

The spacer 4 and the washer 3 function as a positive electrode internal terminal to secure the electrical conductivity between the positive electrode 2 and the positive electrode can 1. When the washer 3 is a waved washer, as shown in the drawing, the contact between the washer 3 and the spacer 4 or the positive electrode can 1 can be made more definite, and the electrical conductivity can be further secured. In FIG. 1, the spacer 4 and the washer 3 (the waved washer) are shown as the positive electrode internal terminal of the coin-type lithium secondary battery, but the positive electrode internal terminal may be a single member or plural members in greater number, and the shape thereof is not limited to that shown in the drawing.

The negative electrode can 7 is a metal can serving as a container member for the coin-type lithium secondary battery, and also functions as the negative electrode terminal (the external terminal). Similarly, the positive electrode can 1 is a metal can serving as a container member, and also functions as the positive electrode terminal (the external terminal). The center part of the positive electrode can 1 is open in order to release gas generated within the battery (not shown). During production of the coin-type lithium secondary battery, the electrolyte solution can be put into the positive electrode can 1 through the opening. By adjusting the amount of electrolyte solution when putting the electrolyte solution in, the leakage of the electrolyte solution to the outside of the battery can be prevented. For example, if the amount of the electrolyte solution put in is adjusted to about 100 $\mu$l, the electrolyte solution may become impregnated in the negative electrode 6, the separator 5, and the positive electrode 2 as described above, and the solution may be held there. The leakage of the electrolyte solution can also be prevented, for example, by using a thick separator 5 having a thickness of about 0.1 $\mu$m to 0.5 $\mu$m.

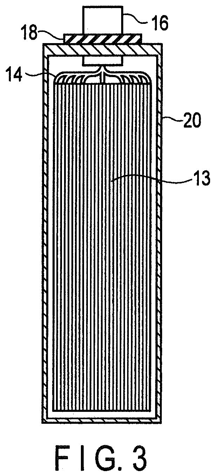

One example of a lithium secondary battery using a square-type metal container is shown in FIG. 2 and FIG. 3.

The electrode group 13 is housed in a rectangular-tube-shaped metal container 20. The electrode group 13 has, for example, a structure where plural positive electrodes 10, negative electrodes 11, and separators 12 are stacked in order of the positive electrode 10, the separator 12, the negative electrode 11 and the separator 12. Alternatively, the electrode group 13 may also have a structure in which the positive electrode 10, the negative electrode 11, and the separator 12 disposed therebetween are spirally wound in a manner such that a flat shape is obtained. Regardless of the structure of the electrode group 13, it is desirable that the separator 12 is disposed as the outermost layer of the electrode group 13 in order to avoid contact between the electrodes and the metal container 20. The electrode group 13 holds the electrolyte solution (not shown).

As shown in FIG. 3, a belt-shaped positive electrode lead 14 is electrically connected to each of plural positions on the edge of the positive electrode 10 located on the end surface of the electrode group 13. Although not shown, a belt-shaped negative electrode lead 15 is electrically connected to each of plural positions on the edge of the negative electrode 11 located on the end surface. The plural positive electrode leads 14 are bundled into one, and electrically connected to a positive electrode conductive tab 16. The positive electrode leads 14 (the positive electrode internal terminals) and the positive electrode conductive tab 16 (the positive electrode external terminal) compose the positive electrode terminal. The negative electrode leads 15 are bundled into one, and connected to a negative electrode conductive tab 17. The negative electrode leads 15 (the negative electrode internal terminals) and the negative electrode conductive tab 17 (the negative electrode external terminal) compose the negative electrode terminal.

A metal sealing plate 21 is fixed over an opening of the metal container 20 by welding or the like. The positive electrode conductive tab 16 and the negative electrode conductive tab 17 are respectively drawn out from outlets, which are provided on the sealing plate 21, to the outside. A positive electrode gasket 18 and a negative electrode gasket 19 are respectively disposed on the inner circumferential surface of each outlet of the sealing plate 21, in order to avoid short-circuiting due to contact of the sealing plate 21 with the positive electrode conductive tab 16 and the negative electrode conductive tab 17. Furthermore, by disposing the positive electrode gasket 18 and the negative electrode gasket 19, the air-tightness of the square-type lithium secondary battery can be maintained.

A control valve 22 (a safety valve) is disposed on the sealing plate 21. When the internal pressure within the battery is increased due to gas generation caused by the electrolysis of the aqueous solvent, the generated gas can be released to the outside through the control valve 22. As the control valve 22, for example, a return type control valve, which operates when an internal pressure becomes higher than a pre-determined value and functions as a sealing plug when the internal pressure is reduced, may be used. Alternatively, a non-return type control valve, which does not recover its function as the sealing plug once it is operated, may also be used. In FIG. 2, the control valve 22 is disposed at the center of the sealing plate 21, but the control valve 22 may be located at the end of the sealing plate 21. The control valve 22 may be omitted.

According to the approach described above, there can be provided a lithium secondary battery that has high safety because an electrolyte solution including an aqueous solvent is used, and that is high in energy density because the battery voltage is high.

(Second Approach)

According to a second approach, a battery module including a lithium secondary battery as a unit cell is provided. As the lithium secondary battery, a lithium secondary battery of the first approach may be used.

Examples of the battery module include a battery module including unit cells as structural units, each being electrically connected to each other in series or in parallel, a battery module including a unit structured by plural unit cells that are electrically connected in series or a unit structured by plural unit cells that are electrically connected in parallel, and the like.

The battery module may be housed in a housing. As the housing, a metal can formed of aluminum alloy, iron, stainless steel, zinc, or the like, or a plastic container, or the like may be used. The container desirably has a wall thickness of 0.5 mm or more.

Examples of the aspect in which the plural lithium secondary batteries are electrically connected in series or in parallel include an aspect in which the plural secondary batteries each has a container and are electrically connected in series or in parallel, and an aspect in which plural electrode groups are housed in the same housing and are electrically connected in series or in parallel. Specific examples of the former are those in which positive electrode terminals and negative electrode terminals of plural lithium secondary batteries are connected via metal bus bars (for example, aluminum, nickel, or copper). Specific examples of the latter include an aspect in which plural electrode groups are housed in one housing in a state of being electrochemically insulated from each other by partitions, and these electrode groups are electrically connected to each other in series. When 5 to 7 batteries are electrically connected in series, for example, a battery module having good voltage compatibility with a lead storage battery can be obtained. In order to further increase the voltage compatibility with the lead storage battery, a structure in which 5 or 6 unit cells are connected in series is preferable.

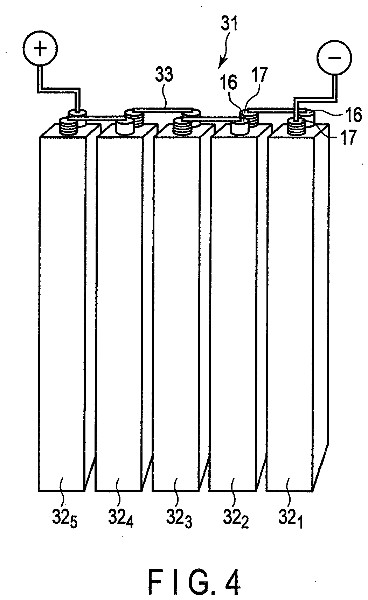

One example of the battery module is explained with reference to FIG. 4.

A battery module 31, shown in FIG. 4, includes plural square-type secondary batteries $32_1$ to $32_5$ according to the first approach (for example, FIGS. 2 and 3) as unit cells. A positive electrode conductive tab 16 of battery $32_1$ and a negative electrode conductive tab 17 of battery $32_2$ positioned adjacent thereto, are electrically connected through a lead 33. Further, a positive electrode conductive tab 16 of the battery $32_2$ and a negative electrode conductive tab 17 of battery $32_3$ positioned adjacent thereto, are electrically connected through a lead 33. In this manner, the batteries $32_1$ to $32_5$ are connected in series.

According to the battery module of the second approach, by including the lithium secondary battery according to the first approach, a battery module having high safety and high energy density can be provided. Furthermore, when 5 of the lithium secondary batteries according to the first approach are connected in series, excellent compatibility with a lead storage battery can be obtained. Therefore, the battery module, in which 5 lithium secondary batteries are connected in series, is capable of being used as an backup power source for a lead storage battery.

(Third Approach)

According to a third approach, a battery pack is provided. The battery pack includes the lithium secondary battery according to the first approach.

The battery pack according to the third approach may include one or more lithium secondary batteries (unit cells) according to the first approach described above. The plural lithium secondary batteries, which may be included in the battery pack according to the third approach, may be electrically connected to each other in series, in parallel or in a combination of in series and in parallel. The plural lithium secondary batteries may be electrically connected to compose a battery module. In the case of composing a battery module from plural secondary batteries, the battery module according to the second approach may be used.

The battery pack according to the third approach may further include a protective circuit. The protective circuit has a function of controlling the charge and discharge of the lithium secondary battery. Alternatively, a circuit included in equipment that uses the battery pack as a power source (for example, an electronic device, a vehicle such as an automobile, or the like) may be used as the protective circuit of the battery pack.

Moreover, the battery pack according to the third approach may further include an external power distribution terminal. The external power distribution terminal is configured to externally output current from the lithium secondary battery and/or to input current into a unit cell 51. In other words, when the battery pack is used as a power source, the current is externally provided through the external power distribution terminal. When the battery pack is charged, the charge current (including a regenerative energy of a power of a vehicle such as an automobile, or the like) is provided to the battery pack through the external power distribution terminal.

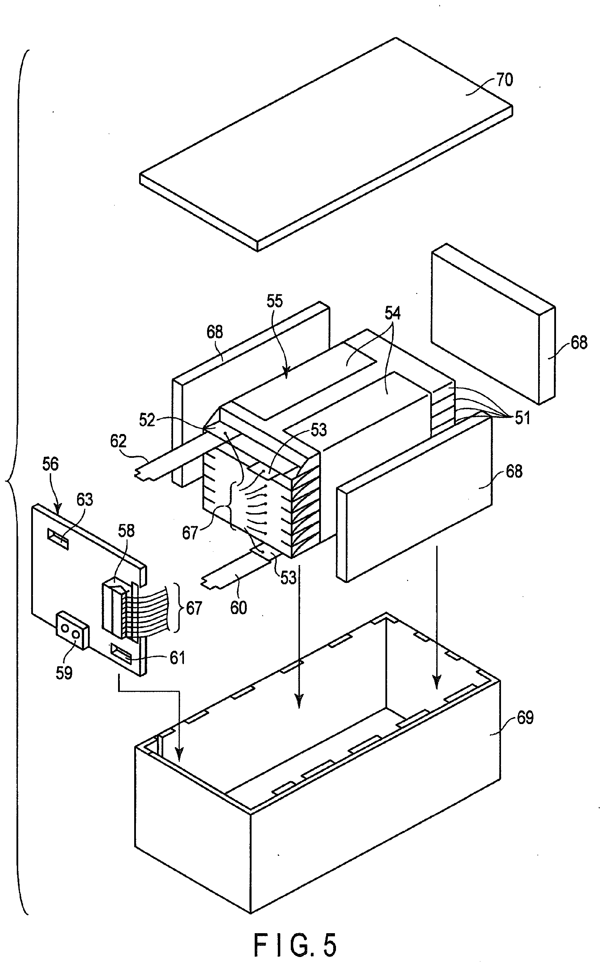

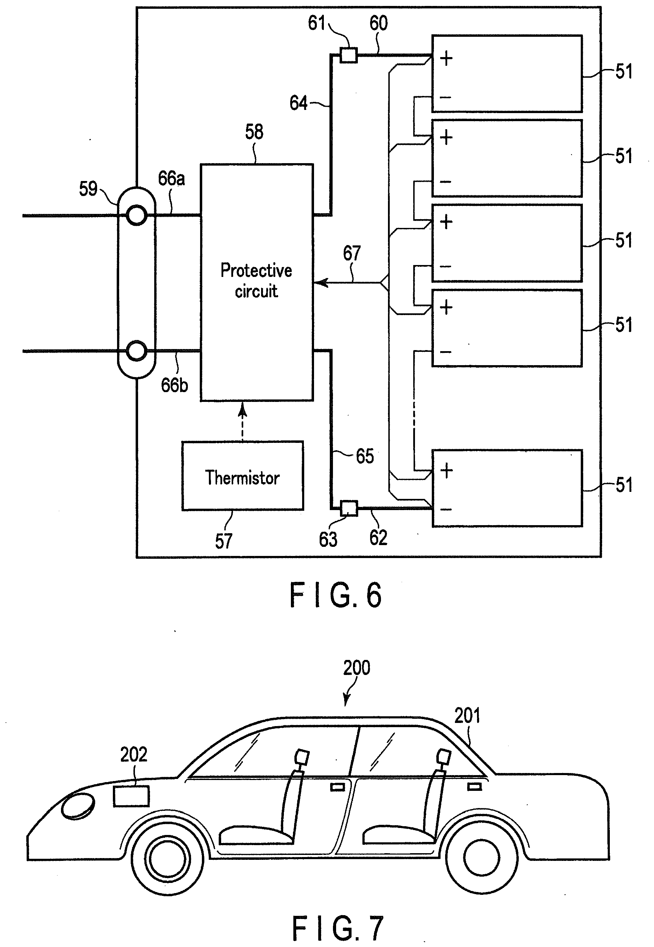

An example of the battery pack according to the third approach is explained with reference to FIG. 5 and FIG. 6.

FIG. 5 is an exploded perspective view showing the battery pack according to the third approach. FIG. 6 is a block diagram showing an electric circuit of the battery pack in FIG. 5.

Plural unit cells 51, i.e. flat-type secondary batteries, are stacked such that externally extending negative electrode terminals 52 and positive electrode terminals 53 are arranged in the same direction, and the resulting stack is fastened with an adhesive tape 54 to form a battery module 55. The unit cells 51 are electrically connected to each other in series, as shown in FIG. 6.

A printed wiring board 56 is disposed facing the side surfaces of the unit cells 51 from which the negative electrode terminals 52 and the positive electrode terminals 53 extend out. A thermistor 57, a protective circuit 58, and an external power distribution terminal 59 are mounted on the printed wiring board 56, as shown in FIG. 6. An electric insulating plate (not shown) is attached to the surface of the printed wiring board 56 facing the battery module 55 to avoid unnecessary connection with wirings of the battery module 55.

A positive electrode lead 60 is connected to a positive electrode terminal 53 located at the lowermost layer of the battery module 55, and the distal end of the lead 60 is inserted into a positive electrode connector 61 on the printed wiring board 56 and thus electrically connected to the connector. A negative electrode lead 62 is connected to a negative electrode terminal 52 located at the uppermost layer of the battery module 55, and the distal end of the lead 62 is inserted into a negative electrode connector 63 on the printed wiring board 56 and thus electrically connected to the connector. The connectors 61 and 63 are connected to the protective circuit 58 through wirings 64 and 65 formed on the printed wiring board 56.

The thermistor 57 detects the temperature of the unit cell 51, and the detection signals are sent to the protective circuit 58. The protective circuit 58 can shut down a plus wiring 66a and a minus wiring 66b between the protective circuit 58 and the external power distribution terminal 59 under predetermined conditions. A predetermined condition is, for example, the case where the temperature detected by the thermistor 57 becomes a predetermined temperature or higher. Another example of the predetermined condition is the case when the over-charge, over-discharge or over-current of the unit cells 51 is detected. The detection of the over-charge, or the like, is performed for each individual unit cell 51 or for the battery module 55. When each individual unit cell 51 is detected, the battery voltage may be detected, or the positive electrode potential or negative electrode potential may be detected. In the latter case, a lithium electrode, which is used as a reference electrode, is inserted into each individual unit cell 51. In the case of FIG. 5 and FIG. 6, a wiring 67 for voltage detection is connected to each of the unit cells 51, and the detected signals are sent to the protective circuit 58 through the wirings 67.

Protective sheets 68, made of rubber or resin, are arranged on three side planes of the battery module 55 except for the side plane from which the positive electrode terminals 53 and the negative electrode terminals 52 protrude out.

The battery module 55 is housed in a housing container 69 together with the protective sheets 68 and the printed wiring board 56. That is, the protective sheets 68 are arranged on both internal surfaces in a long side direction and one internal surface in a short side direction of the housing container 69, and the printed wiring board 56 is disposed on the internal surface on the opposite side in the short side direction. The battery module 55 is located in a space surrounded by the protective sheets 68 and the printed wiring board 56. A lid 70 is attached to the upper surface of the housing container 69.

In order to fix the battery module 55, a heat-shrinkable tape may be used instead of the adhesive tape 54. In such a case, the battery module is fastened by placing the protective sheets on both side surfaces of the battery module, revolving the heat-shrinkable tape around the battery module, and thermally shrinking the heat-shrinkable tape.

In FIGS. 5 and 6, an aspect has been shown in which the unit cells 51 are connected in series; however, in order to increase the battery capacity, the cells may be connected in parallel. Alternatively, the connection in series and the connection in parallel may be combined. Assembled battery packs may be connected to each other in series or in parallel.

Furthermore, although the battery pack shown in FIGS. 5 and 6 include plural unit cells 51, the battery pack according to the third approach may include only one unit cell 51.

The aspect of the battery pack may be appropriately changed depending on the application thereof. The battery pack can be suitably used in applications in which cycle performance is demanded to be excellent when large current is taken out. Specifically the battery pack may be used, for example, as a power source of a digital camera, as a battery for installing on a vehicle such as a two- or four-wheeled hybrid electric automobile, a two- or four-wheeled electric automobile, a power-assisted bicycle, or a railway car, or as a stationary battery. In particular, the battery pack is suitably used for a battery installed on a vehicle.

In a vehicle onto which the battery pack according to the third approach has been installed, the battery pack is configured, for example, to recover regenerative energy from power of the vehicle.

According to the third approach described above, by including the lithium secondary battery according to the first approach, a battery pack having excellent safety and energy density can be provided. According to the approach, accordingly, it is possible to provide a battery pack that is favorable as a backup power source of a lead battery, which is used as a power source of a starter for a vehicle, or as a secondary battery for installing on a hybrid car.

(Fourth Approach)

According to a fourth approach, a vehicle is provided. The battery pack according to the third approach is installed on this vehicle.

In the vehicle according to the fourth approach, the battery pack is configured, for example, to recover regenerative energy from power of the vehicle.

Examples of the vehicle according to the fourth approach include two to four-wheeled hybrid electric automobiles, two to four-wheeled electric automobiles, electric assist bicycles, and railway cars.

In the vehicle according to the fourth approach, the installing position of the battery pack is not particularly limited. For example, the battery pack may be installed in the engine compartment of the vehicle, in rear parts of the vehicle, or under seats.

An example of the vehicle according to the fourth approach is explained below, with reference to the drawings.

FIG. 7 is a schematic view showing an example of a vehicle according to the fourth approach.

A vehicle 200, shown in FIG. 7 includes a vehicle body 201 and a battery pack 202. The battery pack 202 may be the battery pack according to the third approach.

The vehicle 200, shown in FIG. 7, is a four-wheeled automobile. As the vehicle 200, for example, a two- or four-wheeled hybrid electric automobile, a two- or four-wheeled electric automobile, an a power-assisted bicycle, or railway car may be used.

The vehicle 200 may include plural battery packs 202. In that case, the battery packs 202 may be connected to each other in series or in parallel. The connection may be a combination of the connection in series and the connection in parallel.

The battery pack 202 is installed in an engine compartment located at the front of the vehicle body 201. The position at which the battery pack 202 is installed is not particularly limited. The battery pack 202 may be installed in rear sections of the vehicle body 201, or under a seat. The battery pack 202 may be used as a power source of the vehicle 200. The battery pack 202 can also recover regenerative energy of power of the vehicle 200.

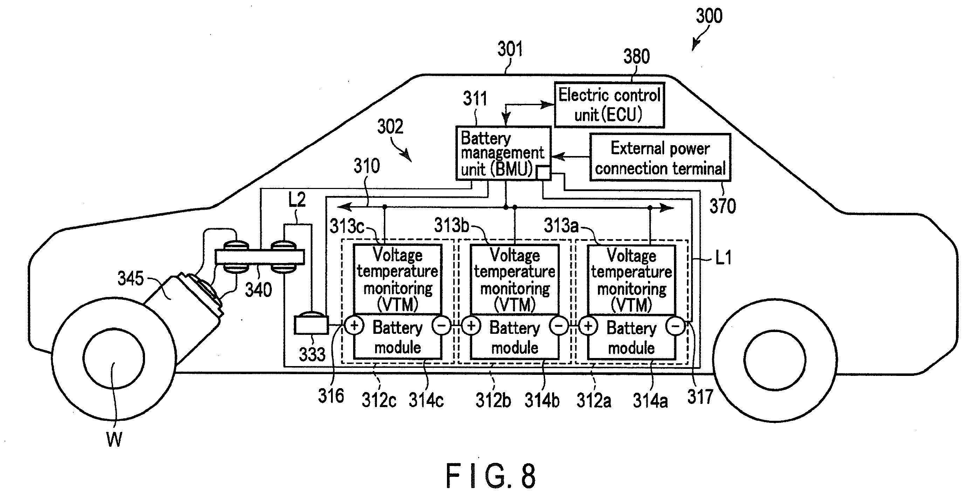

Next, with reference to FIG. 8, the vehicle according to the fourth approach is explained.

FIG. 8 is a view schematically showing another example of the vehicle according to the fourth approach. A vehicle 300, shown in FIG. 8, is an electric automobile.

The vehicle 300, shown in FIG. 8, includes a vehicle body 301, a vehicle power source 302, a vehicle ECU (electric control unit) 380, which is a master controller of the vehicle power source 302, an external terminal (an external power connection terminal) 370, an inverter 340, and a drive motor 345.

The vehicle 300 includes the vehicle power source 302, for example, in an engine compartment, in the rear sections of the automobile body, or under a seat. In FIG. 8, the position of the vehicle power source 302 installed in the vehicle 300 is schematically shown.

The vehicle power source 302 includes plural (for example, three) battery packs 312a, 312b and 312c, BMU (a battery management unit) 311, and a communication bus 310.

The three battery packs 312a, 312b and 312c are electrically connected to each other in series. The battery pack 312a includes a battery module 314a and a battery module monitoring unit (VTM: voltage temperature monitoring) 313a. The battery pack 312b includes a battery module 314b, and a battery module monitoring unit 313b. The battery pack 312c includes a battery module 314c, and a battery module monitoring unit 313c. The battery packs 312a, 312b and 312c can each be independently removed, and may be exchanged by a different battery pack 312.

Each of the battery modules 314a to 314c includes plural unit cells connected to each other in series. At least one of the plural unit cells is the secondary battery according to the first approach. The battery modules 314a to 314c each perform charging and discharging through a positive electrode terminal 316 and a negative electrode terminal 317.

In order to collect information concerning security of the vehicle power source 302, the battery management unit 311 performs communication among the battery module monitoring units 313a to 313c and collects information such as voltages or temperatures of the unit cells included in the battery modules 314a to 314c included in the vehicle power source 302.

The communication bus 310 is connected between the battery management unit 311 and the battery module monitoring units 313a to 313c. The communication bus 310 is configured so that multiple nodes (i.e., the battery management unit and one or more battery module monitoring units) share a set of communication lines. The communication bus 310 is, for example, a communication bus configured based on CAN (Control Area Network) standard. The battery module monitoring units 313a to 313c measure a voltage and a temperature of each unit cell in the battery modules 314a to 314c based on communications from the battery management unit 311. It is possible, however, to measure the temperatures only at several points per battery module and the temperatures of all of the unit cells need not be measured.

The power source for vehicle 302 may also have an electromagnetic contactor (for example, a switch unit 333 shown in FIG. 8) for switching connection between the positive electrode terminal 316 and the negative electrode terminal 317. The switch unit 333 includes a precharge switch (not shown), which is turned on when the battery modules 314a to 314c are charged, and a main switch (not shown), which is turned on when battery output is supplied to a load. The precharge switch and the main switch include a relay circuit (not shown), which is turned on or off based on a signal supplied to a coil located near a switch element.

The inverter 340 converts an inputted DC (direct current) voltage to a three phase AC (alternate current) high voltage for driving a motor. A three phase output terminal of the inverter 340 is connected to each three phase input terminal of the drive motor 345. The inverter 340 controls an output voltage based on control signals from the battery management unit 311 or the vehicle ECU 380, which controls the whole operation of the vehicle. The drive motor 345 is rotated by electric power supplied from the inverter 340. The rotation is transferred to an axle and driving wheels W, for example, through a differential gear unit.

The vehicle 300 also includes a regenerative brake mechanism, which is not shown though. The regenerative brake mechanism rotates the drive motor 345 when the vehicle 300 is braked, and converts kinetic energy to regenerative energy, which is electric energy. The regenerative energy, recovered in the regenerative brake mechanism, is inputted into the inverter 340 and converted to direct current. The direct current is inputted into the vehicle power source 302.

One terminal of a connecting line L1 is connected through a current detector (not shown) in the battery management unit 311 to the negative electrode terminal 317 of the vehicle power source 302. The other terminal of the connecting line L1 is connected to a negative electrode input terminal of the inverter 340.

One terminal of a connecting line L2 is connected through the switch unit 333 to the positive electrode terminal 316 of the vehicle power source 302. The other terminal of the connecting line L2 is connected to a positive electrode input terminal of the inverter 340.

The external terminal 370 is connected to the battery management unit 311. The external terminal 370 is able to connect, for example, to an external power source.

The vehicle ECU 380 cooperatively controls the battery management unit 311 together with other units in response to inputs operated by a driver or the like, thereby performing the management of the whole vehicle. Data concerning the security of the vehicle power source 302, such as a remaining capacity of the vehicle power source 302, are transferred between the battery management unit 311 and the vehicle ECU 380 through communication lines.

The vehicle according to the fourth approach includes the battery pack according to the third approach. The vehicle according to the fourth approach, therefore, has an excellent charge and discharge performance by virtue of including the battery pack having high energy density. In addition, the vehicle can exhibit high safety.

[Examples]

Examples are explained below; however, the present disclosure is not limited to the following Examples so long as the present disclosure does not depart from the spirit of the approaches.

(Example 1)

In Example 1, a coin-type battery (a coin cell) having a structure shown in FIG. 1 was produced by the following procedures.

<Production of Electrode Current Collector>

First, a mixture including 60% by weight of acetylene black as a carbon source and 40% by weight of polyvinylidene fluoride as a binder was dispersed in N-methyl pyrrolidone (NMP) to prepare a slurry of carbon-including coating material. The prepared slurry was coated onto both of reverse surfaces of an aluminum foil having a thickness of 15 $\mu$m. Next, the coat of applied slurry of carbon-including coating material was dried under a 130°C environment. After that, the dried slurry and the aluminum foil were subjected to pressing at a press pressure of 1.0 t/cm$^2$, thereby producing a current collector composed of the aluminum foil having carbon-including coating layers with a layer thickness of 1 $\mu$m.

<Production of Positive Electrode>

To N-methyl pyrrolidone (NMP) were added 100 parts by weight of an $LiMn_2O_4$ powder as a positive electrode active material, 10 parts by weight of acetylene black as an electro-conductive agent, and 10 parts by weight of polyvinylidene fluoride (PVdF) as a binder, which were mixed to prepare a slurry. The prepared slurry was coated onto one surface of the current collector of the aluminum foil with a thickness of 15 $\mu$m and having carbon-including coating layers with a layer thickness of 1 $\mu$m, which had been produced as described above. After the coat of applied slurry was dried, the current collector and the coat were pressed to produce a positive electrode sheet having an electrode density of 2.5 g/cm$^3$. The produced positive electrode sheet was punched into a round shape of $\varphi$ 15 mm, thereby obtaining disk-shaped positive electrodes.

<Production of Negative Electrode>

To NMP were added 100 parts by weight of an $Li_4Ti_5O_{12}$ powder as a negative electrode active material, 10 parts by weight of acetylene black as an electro-conductive agent, and 10 parts by weight of PVdF as a binder, which were mixed to prepare a slurry. The prepared slurry was coated onto one surface of the current collector of the aluminum foil with a thickness of 15 $\mu$m and having carbon-including coating layers with a layer thickness of 1 $\mu$m, which had been produced as described above. After the coat of applied slurry was dried, the current collector and the coat were pressed to produce a negative electrode sheet having an electrode density of 2.5 g/cm$^3$. The produced negative electrode sheet was punched into a round shape of $\varphi$ 19 mm, thereby obtaining disk-shaped negative electrodes.

<Preparation of Electrolyte Solution>

As the electrolyte, $LiNO_3$ was dissolved in a concentration of 8.86 M in water. Thus, the aqueous $LiNO_3$ solution was prepared as such to obtain an electrolyte solution. The concentration of the electrolyte solution was examined using the ion chromatography described above.

<Production of Coin-Type Battery>

First, a cellulose film having a thickness of 50 μm was punched into a round shape of φ 19 mm to obtain a separator. The negative electrode obtained as above, the obtained separator, and a gasket were stacked in this order in a negative electrode can made of stainless steel (SUS). After that, 100 μL of the electrolyte solution, obtained as above, was put into the negative electrode can.

Next, the positive electrode obtained as above, a spacer made of titanium, a washer made of titanium, a positive electrode can made of SUS were stacked onto the separator in this order. After that, the stack, in which each of the battery members had been stacked, was crimped with a hand press to produce a coin cell of Example 1.

With regard to the negative electrode can, the positive electrode can, the spacer, and the washer, portions where there was concern of coming into contact with the electrolyte solution had been coated in advance with a cyanoacrylate resin before the cell production.

(Example 2)

In Example 2, a coin cell of Example 2 was produced in the same manner as in Example 1, except that an aqueous solution including $Li_2SO_4$ in a concentration of 2.03 M was used as the electrolyte solution.

(Example 3)

In Example 3, a coin cell of Example 3 was produced in the same manner as in Example 1, except that an aqueous solution including LiCl in a concentration of 9.04 M was used as the electrolyte solution.

(Example 4)

First, the slurry of carbon-including coating material, which had been produced as above, was coated onto both of reverse surfaces of a zinc foil having a thickness of 50 μm. Next, the coat of the slurry of carbon-including coating material was dried under a 130°C environment. After that, the dried slurry and the zinc foil were subjected to pressing at a press pressure of 1.0 t/cm², thereby producing a current collector composed of the zinc foil having carbon-including coating layers with a layer thickness of 1 μm.

Also, the above described slurry of carbon-including coating layer was coated onto both of reverse surfaces of a titanium foil having a thickness of 20 μm. Next, the coat of the slurry of carbon-including coating material was dried under a 130°C environment. After that, the dried slurry and the titanium foil were subjected to pressing at a press pressure of 1.0 t/cm², thereby producing a current collector composed of the titanium foil having carbon-including coating layers with a layer thickness of 1 μm.

In Example 4, a coin cell of Example 4 was produced in the same manner as in Example 1, except that the zinc foil having a thickness of 50 μm coated with carbon, which had been produced as described above, was used as the negative electrode current collector, and the titanium foil having a thickness of 20 μm coated with carbon, which had been produced as described above, was used as the positive electrode current collector.

(Example 5)

In Example 5, a coin cell of Example 5 was produced in the same manner as in Example 1, except that $LiFePO_4$ was used as the positive electrode active material.

(Example 6)

In Example 6, a coin cell of Example 6 was produced in the same manner as in Example 1, except that $LiCoO_2$ was used as the positive electrode active material.

(Example 7)

In Example 7, a coin cell of Example 7 was produced in the same manner as in Example 1, except that $TiO_2(B)$ was used as the negative electrode active material.

(Example 8)

First, a coating amount of the carbon-including coating material and press pressure were adjusted such that a layer thickness of the carbon-including coating layer was 50 nm, thereby producing a current collector composed of a 15 $\mu$m aluminum foil having carbon-including coating layers with a layer thickness of 50 nm. The press pressure was adjusted to 1.0 t/cm$^2$.

In Example 8, a coin cell of Example 8 was produced in the same manner as in Example 1, except that the 15 $\mu$m-thick aluminum foil having carbon-including coating layers with a layer thickness of 50 nm, which had been produced as above, was used as the current collectors for the positive and negative electrodes.

(Example 9)

In Example 9, a coin cell of Example 9 was produced in the same manner as in Example 8, except that an aluminum foil having no carbon-including coating layer was used as the current collector for the positive electrode.

(Example 10)

In Example 10, a coin cell of Example 10 was produced in the same manner as in Example 1, except that an aqueous solution including $LiNO_3$ in a concentration of 3.05 M was used as the electrolyte solution.

(Example 11)

In Example 11, a coin cell of Example 11 was produced in the same manner as in Example 1, except that an aqueous solution including LiCl in a concentration of 3.02 M was used as the electrolyte solution.

(Example 12)

In Example 12, a coin cell of Example 12 was produced in the same manner as in Example 1, except that an aqueous solution including $Li_2SO_4$ in a concentration of 1.01 M was used as the electrolyte solution.

(Comparative Example 1)

In Comparative Example 1, a coin cell of Comparative Example 1 was produced in the same manner as in Example 1, except that an aluminum foil having no carbon-including coating layer was used as the current collectors for the positive and negative electrodes.

(Comparative Example 2)

In Comparative Example 2, a coin cell of Comparative Example 2 was produced in the same manner as in Example 5, except that an aluminum foil having no carbon-including coating layer was used as the current collectors for the positive and negative electrodes.

(Comparative Example 3)

In Comparative Example 3, a coin cell of Comparative Example 3 was produced in the same manner as in Example 6, except that an aluminum foil having no carbon-including coating layer was used as the current collectors for the positive and negative electrodes.

(Comparative Example 4)

In Comparative Example 4, a coin cell of Comparative Example 4 was produced in the same manner as in Example 7, except that an aluminum foil having no carbon-including coating layer was used as the current collectors for the positive and negative electrodes.

(Comparative Example 5)

In Comparative Example 5, a coin cell of Comparative Example 5 was produced in the same manner as in Example 8, except that an aluminum foil having no carbon-including coating layer was used as the current collector for the negative electrode.

The compounds and materials used for the positive electrode active material, the positive electrode current collector, the negative electrode active material, the negative electrode current collector, and the electrolyte, as well as the concentration of electrolyte in the electrolyte solution in the coin cells of Examples 1 to 12 and Comparative Examples 1 to 5 produced as described above, are summarized in Table 1 shown below.

[Table 1]

| | Positive electrode | | Negative electrode | | Electrolyte | |
|---|---|---|---|---|---|---|
| | Active material | Current collector | Active material | Current collector | Electrolyte | Concentration |
| Example 1 | $LiMn_2O_4$ | 1 μm carbon-coated Al foil | $Li_4Ti_5O_{12}$ | 1 μm carbon-coated Al foil | $LiNO_3$ | 8.86 M |
| Example 2 | $LiMn_2O_4$ | 1 μm carbon-coated Al foil | $Li_4Ti_5O_{12}$ | 1 μm carbon-coated Al foil | $Li_2SO_4$ | 2.03 M |
| Example 3 | $LiMn_2O_4$ | 1 μm carbon-coated Al foil | $Li_4Ti_5O_{12}$ | 1 μm carbon-coated Al foil | LiCl | 9.04 M |
| Example 4 | $LiMn_2O_4$ | 1 μm carbon-coated Ti foil | $Li_4Ti_5O_{12}$ | 1 μm carbon-coated Zn foil | $LiNO_3$ | 9.01 M |
| Example 5 | $LiFePO_4$ | 1 μm carbon-coated Al foil | $Li_4Ti_5O_{12}$ | 1 μm carbon-coated Al foil | $LiNO_3$ | 8.86 M |
| Example 6 | $LiCoO_2$ | 1 μm carbon-coated Al foil | $Li_4Ti_5O_{12}$ | 1 μm carbon-coated Al foil | $LiNO_3$ | 8.86 M |
| Example 7 | $LiMn_2O_4$ | 1 μm carbon-coated Al foil | $TiO_2(B)$ | 1 μm carbon-coated Al foil | $LiNO_3$ | 8.86 M |
| Example 8 | $LiMn_2O_4$ | 50 nm carbon-coated Al foil | $Li_4Ti_5O_{12}$ | 50 nm carbon-coated Al foil | $LiNO_3$ | 8.86 M |
| Example 9 | $LiMn_2O_4$ | Al foil | $Li_4Ti_5O_{12}$ | 50 nm carbon-coated Al foil | $LiNO_3$ | 8.86 M |
| Example 10 | $LiMn_2O_4$ | 1 μm carbon-coated Al foil | $Li_4Ti_5O_{12}$ | 1 μm carbon-coated Al foil | $LiNO_3$ | 3.05 M |
| Example 11 | $LiMn_2O_4$ | 1 μm carbon-coated Al foil | $Li_4Ti_5O_{12}$ | 1 μm carbon-coated Al foil | LiCl | 3.02 M |
| Example 12 | $LiMn_2O_4$ | 1 μm carbon-coated Al foil | $Li_4Ti_5O_{12}$ | 1 μm carbon-coated Al foil | $Li_2SO_4$ | 1.01 M |
| Comparative Example 1 | $LiMn_2O_4$ | Al foil | $Li_4Ti_5O_{12}$ | Al foil | $LiNO_3$ | 8.86 M |
| Comparative Example 2 | $LiFePO_4$ | Al foil | $Li_4Ti_5O_{12}$ | Al foil | $LiNO_3$ | 8.86 M |
| Comparative Example 3 | $LiCoO_2$ | Al foil | $Li_4Ti_5O_{12}$ | Al foil | $LiNO_3$ | 8.86 M |
| Comparative Example 4 | $LiMn_2O_4$ | Al foil | $TiO_2(B)$ | Al foil | $LiNO_3$ | 8.86 M |
| Comparative Example 5 | $LiMn_2O_4$ | 50 nm carbon-coated Al foil | $Li_4Ti_5O_{12}$ | Al foil | $LiNO_3$ | 8.86 M |

<Measurement of Carbon-including coating layer>

For the coin cells of Examples 1 to 12 and Comparative Example 5, in which the aluminum foil having the carbon-including coating layer was used as the positive electrode current collector or the negative electrode current collector, the thickness of the carbon-including coating layers of the current collectors in the positive and negative electrodes were respectively measured by the following method.

First, each electrode was processed using an ion milling apparatus (IM 4000 manufactured by Hitachi, Ltd.) to obtain a cross-sectional sample. The obtained cross-sectional sample was subjected to a cross-section SEM observation at 5000 to 50000 magnification and an EDX analysis. Miniscope TM 3030, manufactured by Hitachi, Ltd., was used for the SEM observation, and Quantax 70, manufactured by Bruker Corporation, was used for the EDX analysis. From the results of obtained SEM images and EDX mapping, the thickness of the carbon-including coating layer was obtained.

When the thickness of the carbon-including coating layer was 200 nm or more, the thickness of the coating layer could be obtained according to the SEM-EDX measurement as described above. On the other hand, when the thickness of the coating layer was determined to be less than 200 nm, instead of the SEM observation, using the method described above, the STEM observation was performed using HD 2300A, manufactured by Hitachi High-Technologies Corporation, and the quantification was performed according to the EDX analysis, whereby the thickness of the coating layer was obtained.

A carbon content (W) in the carbon-including coating layer in each current collector was also obtained by the method described above. As the automatic carbon analyzer, EMIA-820 FA, manufactured by Horiba, Ltd., was used.

The obtained results are shown in Table 2 below.

[Table 2]

| Electrode active material | Electrode current collector | Thickness of carbon-including coating layer | Amount of carbon included in carbon-including coating layer (wt%) |
|---|---|---|---|
| $LiMn_2O_4$ | 1 $\mu$m carbon-coated Al foil | 1.04 $\mu$m | 68.2 |
| $Li_4Ti_5O_{12}$ | 1 $\mu$m carbon-coated Al foil | 1.01 $\mu$m | 70.6 |
| $LiMn_2O_4$ | 50 nm carbon-coated Al foil | 50 nm | 86.4 |
| $Li_4Ti_5O_{12}$ | 50 nm carbon-coated Al foil | 48 nm | 87.1 |
| $LiMn_2O_4$ | 1 $\mu$m carbon-coated Ti foil | 0.98 $\mu$m | 75.2 |
| $Li_4Ti_5O_{12}$ | 1 $\mu$m carbon-coated Zn foil | 0.99 $\mu$m | 74.5 |

<Storage Test>

The coin cells of Examples 1 to 12 and Comparative Examples 1 to 5, which had been obtained as described above, were subjected to a storage test by the following method.

First, each coin cell was charged with a constant current at 1 C rate up to the upper limit voltage under a 25°C environment, and then charged at constant voltage until the current value converged to C/200. Here, the upper limit potential was set to 2.7 V for the coin cells of Examples 1 to 4 and 6 to 12, and the coin cells of Comparative Examples 1 and 3 to 5. For the coin cells of Example 5 and Comparative Example 2, in which $LiFePO_4$ was used as the positive electrode active material, the upper limit voltage was set to 2.2 V. Such a state of charge may be a state of full charge for each coin cell.

Next, a battery voltage of each coin cell was measured after resting the cells for 10 minutes after charging. The obtained voltage was defined as a voltage immediately before storage for each coin cell.

After that, each coin cell was stored under a 35°C environment for 3 days. After the storage, the voltage was measured, and the obtained voltage was defined as a voltage after storage for each coin cell.

The voltage immediately before storage and the voltage after storage, obtained for each coin cell of Examples 1 to 12 and Comparative Examples 1 to 5, are summarized in Table 3 described below.

[Table 3]

|  | Battery voltage immediately before storage (V) | Battery voltage after storage (V) |
|---|---|---|
| Example 1 | 2.65 | 2.60 |
| Example 2 | 2.58 | 2.50 |
| Example 3 | 2.64 | 2.50 |
| Example 4 | 2.65 | 2.60 |
| Example 5 | 2.01 | 1.99 |
| Example 6 | 2.64 | 2.61 |
| Example 7 | 2.60 | 2.50 |
| Example 8 | 2.62 | 2.50 |
| Example 9 | 2.21 | 1.82 |
| Example 10 | 2.61 | 2.33 |
| Example 11 | 2.51 | 2.17 |
| Example 12 | 2.54 | 2.43 |
| Comparative Example 1 | 1.87 | 1.34 |
| Comparative Example 2 | 1.83 | 1.34 |
| Comparative Example 3 | 1.72 | 1.25 |
| Comparative Example 4 | 1.66 | 1.31 |
| Comparative Example 5 | 1.98 | 1.47 |

As shown in Table 3, for all of the coin cells of Examples 1 to 12, the battery voltage immediately before the storage test was of a high value of 2 V or more. In Example 5, the voltage immediately before the storage was about 2.0 V, and therefore low compared to the other Examples; however, this can be considered to be because the upper limit voltage during charging was set at a different value from the other Examples. Specifically, the upper limit voltage was 2.7 V in Examples 1 to 4 and 6 to 12; whereas the upper limit voltage was 2.2 V in Example 5.

On the other hand, in the coin cells of Comparative Examples 1 to 5, the voltages immediately before storage were less than 2 V.

For Examples 1 to 12, an amount of decrease was less than 0.4 V in the battery voltage from before to after the storage of each coin cell under the 35°C environment for 3 days. On the other hand, in the coin cells from Comparative Examples 1 to 3 and 5, the difference from before to after the storage was about 0.5 V. Although the amount of decrease in the battery voltage was relatively small in the coin cell of Comparative Example 4, the battery voltage immediately before storage was significantly low, and a proportion of the amount of decrease in voltage relative to the battery voltage immediately before storage was high.

As described above, the coin cells of Examples 1 to 12 exhibited a high battery voltage, and an amount of decrease in battery voltage was little, even after the coin cells had been stored under the 35°C environment for 3 days. On the other hand, the coin cells of Comparative Examples 1 to 5 exhibited low battery voltage, and a proportional amount of decrease in battery voltage was great when the coin cells were stored under the 35°C environment for 3 days.

(Example 13)

In Example 13, a coin cell of Example 13 was produced in the same manner as in Example 1, except that an aluminum foil having a thickness of 15 $\mu$m and a carbon-including coating layer with a layer thickness of 10 nm was used as the current collector for the negative electrode, $TiNb_2O_7$ was used as the negative electrode active material, and an aqueous solution including $Li_2SO_4$ in a concentration of 1.01 M was used as the electrolyte solution.

(Example 14)

In Example 14, a coin cell of Example 14 was produced in the same manner as in Example 1, except that an aluminum foil having a thickness of 15 $\mu$m and a carbon-including coating layer with a layer thickness of 2 $\mu$m was used as the current collector for the negative electrode, $TiNb_2O_7$ was used as the negative electrode active material, and an aqueous solution including $Li_2SO_4$ in a concentration of 1.01 M was used as the electrolyte solution.

(Example 15)

In Example 15, a coin cell of Example 15 was produced in the same manner as in Example 1, except that an aluminum foil having a thickness of 15 $\mu$m and a carbon-including coating layer with a layer thickness of 3 $\mu$m was used as the current collector for the negative electrode, $TiNb_2O_7$ was used as the negative electrode active material, and an aqueous solution including $Li_2SO_4$ in a concentration of 1.01 M was used as the electrolyte solution.

(Example 16)

In Example 16, a coin cell of Example 16 was produced in the same manner as in Example 1, except that $Li_2Na_2TiNbO_{14}$ was used as the negative electrode active material, and an aqueous solution including $Li_2SO_4$ in a concentration of 1.01 M was used as the electrolyte solution.

(Example 17)

In Example 17, a coin cell of Example 17 was produced in the same manner as in Example 1, except that an aluminum porous material having a carbon-including coating layer with a layer thickness of 1 $\mu$m was used as the current collector for the negative electrode, and an aqueous solution including LiCl in a concentration of 9.04 M was used as the electrolyte solution.

(Comparative Example 6)

In Comparative Example 6, a coin cell of Comparative Example 6 was produced in the same manner as in Example 13, except that an aluminum foil having no carbon-including coating layer was used as the current collector for the negative electrode.

(Comparative Example 7)

In Comparative Example 7, a coin cell of Comparative Example 7 was produced in the same manner as in Example 16, except that an aluminum foil having no carbon-including coating layer was used as the current collector for the negative electrode.

(Comparative Example 8)

In Comparative Example 8, a coin cell of Comparative Example 8 was produced in the same manner as in Example 17, except that an aluminum porous material having no carbon-including coating layer was used as the current collector for the negative electrode.
The compounds and materials used for the positive electrode active material, the positive electrode current collector, the negative electrode active material, the negative electrode current collector, and the electrolyte, as well as the concentration of electrolyte in the electrolyte solution in the coin cells of Examples 13 to 17 and Comparative Examples 6 to 8 produced as described above, are summarized in Table 4 shown below.

[Table 4]

| | Positive electrode | | Negative electrode | | Electrolyte | |
|---|---|---|---|---|---|---|
| | Active material | Current collector | Active material | Current collector | Electrolyte | Concentration |
| Example 13 | $LiMn_2O_4$ | 1 $\mu$m carbon-coated Al foil | $TiNb_2O_7$ | 10 nm carbon-coated Al foil | $Li_2SO_4$ | 1.01 M |
| Example 14 | $LiMn_2O_4$ | 1 $\mu$m carbon-coated Al foil | $TiNb_2O_7$ | 2 $\mu$m carbon-coated Al foil | $Li_2SO_4$ | 1.01 M |

(continued)

| | Positive electrode | | Negative electrode | | Electrolyte | |
|---|---|---|---|---|---|---|
| | Active material | Current collector | Active material | Current collector | Electrolyte | Concentration |
| Example 15 | $LiMn_2O_4$ | 1 $\mu$m carbon-coated Al foil | $TiNb_2O_7$ | 3 $\mu$m carbon-coated Al foil | $Li_2SO_4$ | 1.01 M |
| Example 16 | $LiMn_2O_4$ | 1 $\mu$m carbon-coated Al foil | $Li_2Na_2TiNbO_{14}$ | 1 $\mu$m carbon-coated Al foil | $Li_2SO_4$ | 1.01 M |
| Example 17 | $LiMn_2O_4$ | 1 $\mu$m carbon-coated Al foil | $Li_4Ti_5O_{12}$ | 1 $\mu$m carbon-coated Al porous material | LiCl | 9.04 M |
| Comparative Example 6 | $LiMn_2O_4$ | 1 $\mu$m carbon-coated Al foil | $TiNb_2O_7$ | Al foil | $Li_2SO_4$ | 1.01 M |
| Comparative Example 7 | $LiMn_2O_4$ | 1 $\mu$m carbon-coated Al foil | $Li_2Na_2TiNbO_{14}$ | Al foil | $Li_2SO_4$ | 1.01 M |
| Comparative Example 8 | $LiMn_2O_4$ | 1 $\mu$m carbon-coated Al foil | $Li_4Ti_5O_{12}$ | Al porous material | LiCl | 9.04 M |

<Measurement of Carbon-Including Coating Layer>

For the coin cells of Examples 13 to 17, in which the aluminum foil having the carbon-including coating layer was used as the negative electrode current collector, the thickness of the carbon-including coating layer of the current collector in each negative electrode was measured by the following method.

First, each electrode was processed to obtain a cross-sectional sample. Using the obtained cross-sectional sample, the STEM observation or SEM observation was performed, and then the EDX analysis was performed, as described above, whereby the thickness of the carbon-including coating layer was obtained. Specifically, the thickness of the carbon-including coating layer whose coating layer thickness was less than 200 nm could be obtained by the STEM observation and the EDX analysis. On the other hand, with respect to the carbon-including coating layer whose coating layer thickness was 200 nm or more, the SEM observation and the EDX analysis were performed, and the thickness of the coating layer was obtained from the results of the obtained SEM images and the EDX mapping.

A carbon content (W) in the carbon-including coating layer in each current collector was also obtained by the method described above. As the automatic carbon analyzer, EMIA-820 FA, manufactured by Horiba, Ltd., was used.

The obtained results are shown in Table 5 below.

[Table 5]

| Electrode active material | Electrode current collector | Thickness of carbon-including coating layer | Amount of carbon included in carbon-including coating layer (wt%) |
|---|---|---|---|
| $TiNb_2O_7$ | 10 nm carbon-coated Al foil | 10 nm | 85.3 |
| $TiNb_2O_7$ | 2 $\mu$m carbon-coated Al foil | 1.95 $\mu$m | 74.8 |
| $TiNb_2O_7$ | 3 $\mu$m carbon-coated Al foil | 3.02 $\mu$m | 83.1 |
| $Li_2Na_2TiNbO_{14}$ | 1 $\mu$m carbon-coated Al foil | 1.05 $\mu$m | 70.4 |
| $Li_4Ti_5O_{12}$ | 1 $\mu$m carbon-coated Al porous material | 1.10 $\mu$m | 80.2 |

<Storage Test>

The coin cells of Examples 13 to 17 and Comparative Examples 6 to 8, which had been obtained as described above, were subjected to a storage test by the following method.

First, each coin cell was charged with a constant current at 1 C rate up to the upper limit voltage under a 25°C environment, and then charged at constant voltage until the current value converged to C/200. Here, the upper limit potential was set to 2.7 V. Such a state of charge may be a state of full charge for each coin cell.

Next, a battery voltage of each coin cell was measured after resting the cells for 10 minutes after charging. The obtained voltage was defined as a voltage immediately before storage for each coin cell.

After that, each coin cell was stored under a 25°C environment for one day. After the storage, the voltage was measured, and the obtained voltage was defined as a voltage after storage for each coin cell.

The voltage immediately before storage and the voltage after storage, obtained for each coin cell of Examples 13 to 17 and Comparative Examples 6 to 8, are summarized in Table 6 below.

[Table 6]

|  | Battery voltage immediately before storage (V) | Battery voltage after storage (V) |
|---|---|---|
| Example 13 | 2.65 | 2.32 |
| Example 14 | 2.66 | 2.45 |
| Example 15 | 2.64 | 2.52 |
| Example 16 | 2.66 | 2.48 |
| Example 17 | 2.62 | 2.38 |
| Comparative Example 6 | 1.85 | 1.33 |
| Comparative Example 7 | 1.78 | 1.26 |
| Comparative Example 8 | 1.88 | 1.30 |

As shown in Table 6, for all of the coin cells of Examples 13 to 17, the battery voltage immediately before the storage test was of a high value of 2.6 V or more.

On the other hand, in the coin cells of Comparative Examples 6 to 8, the voltages immediately before storage were less than 2 V.

For Examples 13 to 17, an amount of decrease was less than 0.4 V in the battery voltage from before to after the storage of each coin cell under the 25°C environment for one day. On the other hand, in the coin cells from Comparative Examples 6 to 8, the difference from before to after the storage was about 0.5 V.

As described above, the coin cells of Examples 13 to 17 exhibited a high battery voltage, and an amount of decrease in battery voltage was little, even after the coin cells had been stored under the 25°C environment for one day. On the other hand, the coin cells of Comparative Examples 6 to 8 exhibited low battery voltage, and a proportional amount of decrease in battery voltage was great when the coin cells were stored under the 25°C environment for one day.

According to at least one approach described above, a secondary battery including a positive electrode, a negative electrode, and an electrolyte solution is provided. The negative electrode includes a negative electrode active material including a titanium-including oxide, and a negative electrode current collector having a carbon-including coating layer on at least a part of a surface thereof. The electrolyte solution includes an aqueous solvent and an electrolyte. According to such a structure, there can be provided a secondary battery having high safety by virtue of using the electrolyte solution including the aqueous solvent, and having high energy density by virtue of high battery voltage.

While certain approaches have been described, these approaches have been presented by way of example only, and are not intended to limit the scope of the claims. Indeed, the apparatuses described herein may be embodied in a variety of other forms; furthermore, various omissions, substitutions and changes in the form of the apparatuses described herein may be made.

The present disclosure also encompasses the following approaches of batteries:

1. A secondary battery comprising:

a positive electrode;
a negative electrode which includes a negative electrode current collector having a carbon-including coating layer on at least a part of a surface thereof, and a negative electrode mixed-materials layer disposed on the negative electrode current collector, the negative electrode mixed-materials layer including a negative electrode active material that includes a titanium-including oxide; and

an electrolyte solution including an aqueous solvent and an electrolyte.

2. The secondary battery according to clause 1, wherein the carbon-including coating layer has a thickness of 10 nm to 3 $\mu$m.

3. The secondary battery according to clause 1 or 2, wherein the carbon-including coating layer includes carbon in an amount of 60% by weight to 98% by weight.

4. The secondary battery according to any one of clauses 1 to 3, wherein the electrolyte includes at least one anion selected from the group consisting of $NO_3^-$, $Cl^-$, $LiSO_4^-$, $SO_4^{2-}$, and $OH^-$.

5. The secondary battery according to any one of clauses 1 to 4, wherein the titanium-including oxide includes at least one compound selected from the group consisting of an oxide of titanium and a lithium-titanium oxide having a spinel-type structure.

6. The secondary battery according to any one of clauses 1 to 5, wherein the positive electrode includes a positive electrode active material including at least one compound selected from the group consisting of $Li_xFePO_4$ wherein $0 \leq x \leq 1$, $Li_xMnO_2$ wherein $0 < x \leq 1$, and $Li_xCoO_2$ wherein $0 < x \leq 1$.

7. The secondary battery according to any one of clauses 1 to 6, wherein the positive electrode includes a positive electrode current collector having a carbon-including coating layer on at least a part of a surface thereof.

8. The secondary battery according to any one of clauses 1 to 7, wherein the negative electrode current collector includes an electrically conductive foil including at least one metal selected from the group consisting of aluminum, copper, zinc, nickel, titanium, and stainless steel.

9. The secondary battery according to any one of clauses 1 to 7, wherein the negative electrode current collector includes an electrically conductive foil including at least one metal selected from the group consisting of aluminum, copper, zinc, nickel, titanium, and stainless steel, the electrically conductive foil having a carbon-including coating layer on at least a part of a surface thereof.

10. A battery pack comprising a secondary battery according to any one of clauses 1 to 9.

11. The battery pack according to clause 10, wherein the battery pack further comprises an external power distribution terminal and a protective circuit.

12. The battery pack according to clause 10 or 11 comprising a plural of the secondary batteries, the secondary batteries being electrically connected to each other in series, in parallel, or in combination of in series and in parallel.

13. A vehicle comprising the battery pack according to any one of clauses 10 to 12.

14. The vehicle according to clause 13, wherein the battery pack is configured to recover a regenerative energy of a power of the vehicle.

**Claims**

1. A secondary battery (51) comprising:

   a positive electrode (10);
   a negative electrode (11) which includes a negative electrode current collector having a carbon-including coating layer on at least a part of a surface thereof, and a negative electrode mixed-materials layer disposed on the negative electrode current collector, the negative electrode mixed-materials layer including a negative electrode active material that includes a titanium-including oxide; and
   an electrolyte solution including an aqueous solvent and an electrolyte.

2. The secondary battery (51) according to claim 1, wherein the carbon-including coating layer has a thickness of 10 nm to 3 $\mu$m.

3. The secondary battery (51) according to claim 1 or 2, wherein the carbon-including coating layer includes carbon in an amount of 60% by weight to 98% by weight.

4. The secondary battery (51) according to any one of claims 1 to 3, wherein the electrolyte includes at least one anion selected from the group consisting of $NO_3^-$, $Cl^-$, $LiSO_4^-$, $SO_4^{2-}$, and $OH^-$.

5. The secondary battery (51) according to any one of claims 1 to 4, wherein the titanium-including oxide includes at least one compound selected from the group consisting of an oxide of titanium and a lithium-titanium oxide having a spinel-type structure.

6. The secondary battery (51) according to any one of claims 1 to 5, wherein the positive electrode (10) includes a positive electrode active material including at least one compound selected from the group consisting of $Li_xFePO_4$ wherein $0 \leq x \leq 1$, $Li_xMnO_2$ wherein $0 < x \leq 1$, and $Li_xCoO_2$ wherein $0 < x \leq 1$.

7. The secondary battery (51) according to any one of claims 1 to 6, wherein the positive electrode (10) includes a positive electrode current collector having a carbon-including coating layer on at least a part of a surface thereof.

8. The secondary battery (51) according to any one of claims 1 to 7, wherein the negative electrode current collector (11) includes an electrically conductive foil including at least one metal selected from the group consisting of aluminum, copper, zinc, nickel, titanium, and stainless steel.

9. The secondary battery (51) according to any one of claims 1 to 7, wherein the negative electrode current collector (11) includes an electrically conductive foil including at least one metal selected from the group consisting of aluminum, copper, zinc, nickel, titanium, and stainless steel, the electrically conductive foil having a carbon-including coating layer on at least a part of a surface thereof.

10. A battery pack (202) comprising a secondary battery (51) according to any one of claims 1 to 9.

11. The battery pack (202) according to claim 10, wherein the battery pack (202) further comprises an external power distribution terminal (59) and a protective circuit (58).

12. The battery pack (202) according to claim 10 or 11 comprising a plural of the secondary batteries (51), the secondary batteries (51) being electrically connected to each other in series, in parallel, or in combination of in series and in parallel.

13. A vehicle (200) comprising the battery pack (202) according to any one of claims 10 to 12.

14. The vehicle (200) according to claim 13, wherein the battery pack (202) is configured to recover a regenerative energy of a power of the vehicle (200).

FIG. 1

FIG. 2

F I G. 3

FIG. 4

F I G. 5

F I G. 6

F I G. 7

FIG. 8

Europäisches
Patentamt

European
Patent Office

Office européen
des brevets

## EUROPEAN SEARCH REPORT

Application Number

EP 17 16 0783

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/087742 A1 (MARTINET SEBASTIEN [FR] ET AL) 2 April 2009 (2009-04-02) | 1-5,7-14 | INV.<br>H01M4/485 |
| Y | * paragraph [0003] *<br>* paragraph [0032] - paragraph [0040] *<br>----- | 1 | H01M4/62<br>H01M4/66<br>H01M10/36 |
| X | US 2010/136427 A1 (KONDO HIROKI [JP] ET AL) 3 June 2010 (2010-06-03)<br>* paragraph [0007] *<br>* paragraph [0136] - paragraph [0139] *<br>* paragraph [0180] *<br>* table 1 *<br>----- | 1,4-9 | |
| Y | US 2015/318530 A1 (YUSHIN GLEB [US] ET AL) 5 November 2015 (2015-11-05)<br>* paragraph [0091] *<br>* paragraph [0094] *<br>* paragraph [0096] *<br>* paragraph [0159] *<br>* paragraph [0055] *<br>----- | 1 | |
| A | WO 2015/107423 A2 (SUMITOMO ELECTRIC INDUSTRIES [JP]) 23 July 2015 (2015-07-23)<br>* paragraph [0068] - paragraph [0073] *<br>* figure 1 *<br>----- | 1-14 | TECHNICAL FIELDS SEARCHED (IPC)<br><br>H01M |

The present search report has been drawn up for all claims

| Place of search | Date of completion of the search | Examiner |
|---|---|---|
| The Hague | 26 June 2017 | Fertig, Andrea |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 17 16 0783

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2017

| Patent document cited in search report | | Publication date | Patent family member(s) | | Publication date |
|---|---|---|---|---|---|
| US 2009087742 | A1 | 02-04-2009 | AT | 528810 T | 15-10-2011 |
| | | | CN | 101373845 A | 25-02-2009 |
| | | | EP | 2034543 A1 | 11-03-2009 |
| | | | ES | 2373931 T3 | 10-02-2012 |
| | | | FR | 2920255 A1 | 27-02-2009 |
| | | | JP | 5385565 B2 | 08-01-2014 |
| | | | JP | 2009110931 A | 21-05-2009 |
| | | | KR | 20090021096 A | 27-02-2009 |
| | | | PL | 2034543 T3 | 29-02-2012 |
| | | | US | 2009087742 A1 | 02-04-2009 |
| US 2010136427 | A1 | 03-06-2010 | JP | 5218406 B2 | 26-06-2013 |
| | | | JP | WO2009008280 A1 | 09-09-2010 |
| | | | US | 2010136427 A1 | 03-06-2010 |
| | | | WO | 2009008280 A1 | 15-01-2009 |
| US 2015318530 | A1 | 05-11-2015 | US | 2015318530 A1 | 05-11-2015 |
| | | | WO | 2015168367 A1 | 05-11-2015 |
| WO 2015107423 | A2 | 23-07-2015 | JP | 2015156356 A | 27-08-2015 |
| | | | WO | 2015107423 A2 | 23-07-2015 |

EPO FORM P0459

For more details about this annex : see Official Journal of the European Patent Office, No. 12/82